Europäisches Patentamt

European Patent Office

Office européen des brevets

(11) Publication number: **0 189 411**
**B1**

## EUROPEAN PATENT SPECIFICATION

(45) Date of publication of patent specification: **26.07.89**

(51) Int. Cl.⁴: **B 29 C 53/14, F 28 F 13/12**

(21) Application number: **84903754.4**

(22) Date of filing: **15.10.84**

(86) International application number:
**PCT/GB84/00349**

(87) International publication number:
**WO 85/01691 25.04.85 Gazette 85/10**

(54) IMPROVEMENTS TO HEAT EXCHANGERS.

(30) Priority: **21.10.83 CA 439489**

(43) Date of publication of application:
**06.08.86 Bulletin 86/32**

(45) Publication of the grant of the patent:
**26.07.89 Bulletin 89/30**

(84) Designated Contracting States:
**DE FR GB**

(56) References cited:
**DE-A-1 729 374
FR-A- 537 152
FR-A-2 269 388
FR-A-2 338 128
FR-A-2 404 511
US-A-2 494 689
US-A-2 661 499
US-A-3 434 277
US-A-3 441 637
US-A-4 117 064**

(73) Proprietor: **P.V. TRIM LIMITED
2530 Cawthra Road Mississauga
Ontario L5A 2X1 (CA)**

(72) Inventor: **BLOOMFIELD, George, Albert
25 Joycelyn Drive Mississauga
Ontario L5N 1T5 (CA)**

(74) Representative: **Hayward, Denis Edward Peter
et al
Lloyd Wise, Tregear & Co. Norman House
105-109 Strand
London WC2R 0AE (GB)**

Courier Press, Leamington Spa, England.

## Description

This invention relates to an apparatus and a method for producing twisted ribbon suitable for use in heat exchangers.

In a heat exchanger, two fluids are kept physically separated by interface walls, through which heat transfer between the two fluids can take place. It is known that the efficiency of heat transfer is improved if the fluids, or one of the fluids, is made to flow over the surfaces of the interface walls at high speed. It is known for the normal flow velocity of the fluid through the exchanger effectively to have superimposed upon it a swirling velocity, so that the fluid circulates over the surfaces with greater vigour than it would if the fluid were simply flowing normally.

A swirling action may be generated by providing lengths of plastic ribbon that are twisted into helices. The twisted ribbons are inserted in the tubes of the heat exchanger. Fluid flowing along the tube therefore travels in a helical path, the fluid near the walls of the tube moving the fastest. There is no buffeting of the fluid, though: the fluid moves smoothly, and yet readily mixes with itself so that internal temperature gradients do not build up in the fluid. The twisted ribbon should substantially fill the tube; if the ribbon is too small, then the characteristic swirling effect will be lost.

If it were necessary to attach the plastic ribbon to the inside wall of a tube, then that would be too difficult and expensive. However, the ribbon need not be attached, but simply needs to be held against rotation relative to the tube, and that can easily be done from outside the tube. In fact, the twisted plastic ribbon simply needs to be made twice as long as one tube, the ribbon being doubled over and the ends inserted each in a respective tube: no other mounting or location is then necessary.

Automotive engine radiators are a common form of heat exchanger. Conventionally, such radiators have had copper tubes, which are somewhat flattened to increase their surface area. Aluminum nearly approaches the thermal conductivity of copper, but it is rather difficult to produce flattened tubes in aluminum, since aluminum tends to crack easily: but if the tubes are circular so as to be free from cracking, then their surface area is too small. However, round-cored aluminum radiators become economically feasible if some means is provided inexpensively to increase the flow velocity of the coolant over the inside surfaces of the aluminum tube walls; the twisted plastic ribbon just described is admirably suited to just that application.

In the prior art, French patent specification numbers FR—A—2 404 511 and FR—A—2 269 388 appear to be the most pertinent references in regard to the problem of the present invention.

FR—A—2 404 511 teaches the provision of twisted ribbons of polypropylene inserted within the tubes of a heat exchanger. However, in the process for making the twisted ribbons an extrusion head is coupled to a rotary twisting die, to form the ribbon and simultaneously impart the desired degree of twist, prior to passing through a water bath to set the twist.

FR—A—2 269 388 teaches the formation from plain strip of a helically deformed ribbon, for use as a turbulence generator within a heat exchanger tube. However, the helical strip in that case is of metal, being of sufficient stiffness to be propelled by a pair of friction rollers through the helical deforming zone.

In the case of FR—A—2 404 511, owing to the simultaneous extrusion and twisting of the ribbon while at a temperature above the critical setting temperature, the effective diameter of the ribbon in order to meet the sizing die requirement must be controlled precisely by the degree of tension applied to the ribbon by the pulling means, located on the downstream side of the cooling bath. As the width and the thickness of the ribbons, and its degree of twist, are all affected by the tension applied thereto, this makes control and product consistency difficult to achieve.

In the case of FR—A—2 269 388, the use of a metallic ribbon being longitudinally pushed through a helix-forming zone in a cold condition clearly does not assist one in reaching a solution in regard to a plastic ribbon. The problem therefore remains as to how to achieve an apparatus for and method of twisting ribbon that are applicable to plastic ribbon yet avoid the control difficulties inherent in simultaneous extrusion and twisting of the ribbon.

According to the present invention, there is provided an apparatus for producing twisted ribbon, characterised by the following structure:

a first set of traction rollers;

a heating means for heating the material of the ribbon above its critical temperature;

a main cooling means for cooling the ribbon;

a final set of traction rollers;

wherein the ribbon is passed through the first set of rollers, the heating means, the main cooling means and the final set of rollers, in that consecutive order;

and wherein the final set of rollers is mounted for rotation about an axis along the length of the ribbon, to twist the ribbon.

The present invention further provides a method of producing a twisted ribbon characterised by comprising the steps, in sequence, of:

passing untwisted ribbon through a first set of traction rollers;

heating the ribbon to a temperature above its critical temperature;

cooling the ribbon;

passing the ribbon through a final set of traction rollers, and rotating the final set of rollers about an axis along the length of the ribbon to twist the ribbon.

The foregoing apparatus and method may be operated by adjusting the traction drives of the respective sets of traction rollers so as to maintain the ribbon between the two sets in a state of slight tension, in order to stabilise the ribbon in its passage without significant stretching or undue change in section.

On the upstream side of the first set of traction rollers preliminary cooling means may be provided, for cooling the ribbon to a stabilised size condition before it enters the rollers.

In the case of an extended plastic ribbon, this preliminary cooling means may be located to receive the ribbon immediately after it has been extruded, to thereby set the ribbon section.

Both the main cooling means and the preliminary cooling means may comprise water baths. These are low in cost and effective.

Thus, in the preferred embodiment of the invention, prior to its passage to the first set of traction rollers the ribbon is extruded to size and cooled, this substantially determining the cross section substantially independently of the twisting aspect of the process, although a slight reduction in section occurs during the succeeding process.

The ribbon may be rapidly chopped to length as it emerges still rotating through the final set of rollers, where it is in a cooled set condition, whereby undue wind-up of the rotating ribbon is avoided.

The invention provides an apparatus for, and a method of, making the twisted plastic ribbon in such a way as to render use of the ribbon a viable proposition for automotive radiators, which in turn means that round-cored aluminum radiators become viable. The fact that the ribbon can be made of such a quality and at such a price as to be suitable for automotive use also leads to a wide variety of other kinds of heat exchanger that can advantageously use the ribbon.

Referring in more detail to the preferred embodiment, the ribbon is twisted after extrusion in the following manner. Two sets of traction rollers are provided, the degree of traction on each being adjusted so that the ribbon in passing between the sets of rollers is under a slight tension. Between the two sets of rollers, the ribbon is first heated to above its critical temperature, and then subsequently cooled. The final set of rollers is caused to rotate, about an axis along the length of the ribbon, to impart the required helical twist to the ribbon.

Above the critical temperature, the material "loses its memory"; that is to say that if the material is distorted and deformed when at the high temperature, its new shape becomes permanent after cooling, whereas the material gradually returns to its original shape if it is deformed when below the temperature. When the ribbon is above its critical temperature, it lacks structural strength to the extent that all it can support is a very light tensile force. In the invention, the order in which the ribbon encounters the components of the apparatus is therefore important: the ribbon is not strong enough to be fed through rollers unless it is cool, and placing the heater and the cooler in sequence between the two sets of rollers allows this to be the case.

When the ribbon is hot it does not need to touch anything.

The ribbon is also hot (and weak) at the point where it emerges from the extrusion die. Preferably therefore the ribbon is cooled before it is fed into the first pair of traction rollers.

Water baths provide a convenient cooling means, both for the cooling between the sets of rollers, and for the cooling between the extrusion die and the first set of rollers.

An exemplary embodiment of the invention will now be described, with reference to the accompanying drawings.

Figure 1 is a pictorial view of a twisted plastic ribbon;

Figure 2 is a section of an automotive radiator which includes twisted plastic ribbons;

Figure 3 is a diagrammatic view of an apparatus for making the ribbon.

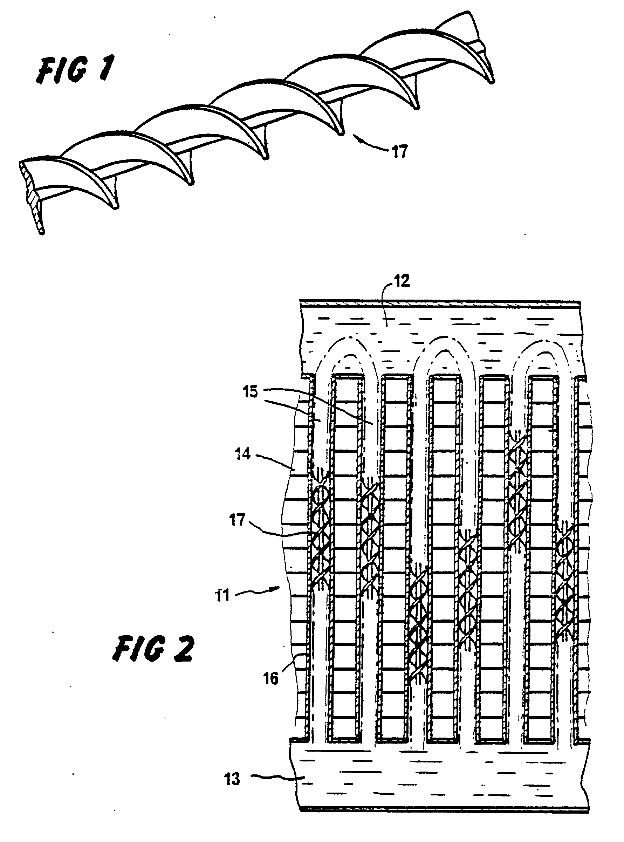

The radiator 11 shown in Figure 2 comprises a header tank 12, a bottom tank 13, and a core 14. The core 14 comprises a series of finned tubes 15. The walls 16 of the tubes 15 are circular, and are made of aluminum.

A length of twisted plastic ribbon 17 is doubled over, and its two ends are inserted one each into respective tubes 15. All the tubes 15 contain twisted plastic ribbons, arranged in this manner. (In the construction of the radiator 11 the header tank 12 was not secured to the core 14 until after the ribbons 17 had all been inserted in the tubes 15).

The circle circumscribing the twisted ribbon 17 is a little less than the bore of the tube 15 (i.e., the inside diameter of the walls 16). The ribbon 17 can thus be easily inserted by hand all the way into the tube 15, yet the ribbon 17 is a snug fit within the tube 15: water substantially cannot pass along the tube without following the helical path created by the twisted ribbon 17.

The ribbon 17 was formed to the helically twisted shape using the apparatus and method of the invention which will now be described.

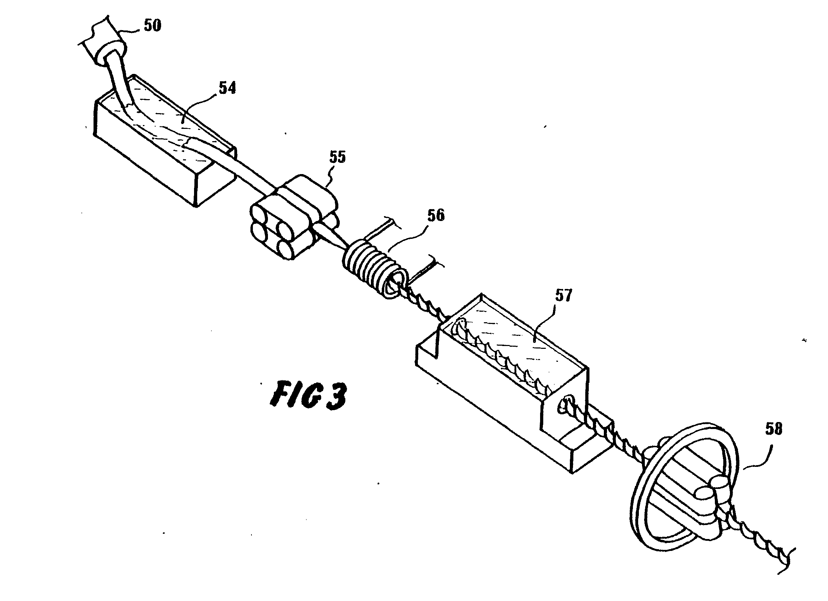

The ribbon is extruded in the conventional way, emerging from an extrusion die 50, as shown in Figure 3. The ribbon at this point is very hot (about 250 degrees C) and very delicate. Before passing through the first set of traction rollers, the ribbon has to be cooled to an extent that it can pass through the rollers without sticking to them, and without being damaged. This cooling is effected by extruding the ribbon straight into a preliminary cooling means, comprising a bath 54 of water, which is maintained at around 40 degrees C: after the ribbon has passed through the first set of traction rollers, it will be heated again, so there would be no point in cooling the ribbon more than is necessary to give the ribbon just enough strength to pass through the rollers.

Upon emerging from the bath 54, the ribbon enters the first set 55 of traction rollers. The traction on the set 55 is arranged to give a slight tension to the ribbon so that the ribbon dips into the water in the bath 54, without touching the bottom of the bath.

Next, the ribbon enters a heating coil 56. Conveniently, the heater is electrically powered. Its purpose is to heat the ribbon up above its critical temperature, so that when the ribbon is twisted it will retain its twisted shape. The heater should be set at a temperature of about 250 degrees C to achieve this. Once again, the ribbon becomes extremely flimsy at such temperatures.

From the heater 56, the ribbon enters a main cooling means, comprising a cold water quenching bath 57, to bring it down to room temperature, when it becomes strong and tough.

The now-robust ribbon that leaves the bath 57 is picked up by the final set 58 of traction rollers. The traction on the set 58 is set so as to maintain a slight tension on the ribbon between the first set 55 and the final set 58: only a little tension, however, since the ribbon becomes very weak as it passes through the heater 56. In fact, the slight tension described does have the effect of elongating or drawing the ribbon to some extent, and the extruded cross-section should be made slightly oversized to compensate for the consequential reduction of section.

The final set 58 of traction rollers is arranged for rotation about an axis along the length of the ribbon, and it is this rotation that imparts the required helical twist to the ribbon. Since the ribbon is at its weakest when it is within the heater 56, most of the twisting takes place at that point. The traction drive to the rollers 58 may be provided by an electric motor: since the set of rollers has to rotate, the power to that motor is conveniently supplied by slip-rings. By having the traction drive independently adjustable from the rotational speed of the set of rollers, the correct degree of ribbon tension for a particular pitch of convolutions may be finely tuned. Once the correct balance is found, the rotational speed and the traction speed can be fixed proportionately by having the one geared from the other. Similarly, the traction speed of the first set 55 of rollers can be geared to that of the final set 58.

With the apparatus arranged as described, the ribbon can be manufactured as a continuous operation. There is no need to cut the ribbon into lengths before heating it and twisting it. The above described economies and usefulness of the invention all derive basically from the fact that the twisted ribbon can be made in a continuous process.

Of course, the ribbon has to be cut into lengths eventually, but this can be done when the ribbon has emerged from the final set 58 of rollers, whilst the ribbon is still rotating. A rapid chopping action cuts the ribbon without causing undue wind-up of the rotating ribbon. The twisted ribbon is ready for use as soon as it is cut.

The material of the ribbon used in the radiator was a general-purpose extrusion-grade homopolymer polypropylene, which has inherently high melt strength, good chemical resistance and good heat stability. For other applications, other materials might be used such as ABS, rigid PVC, nylon, or other structural polymers.

The benefits that arise from the economical production of twisted ribbon are not only applicable to aluminum round-cored automotive engine radiators. The potentially more efficient heat transfer is always useful, though the twisted ribbon only achieves its full performance when the heat exchanger tubes are round. Also, if high temperature fluids are in use, the ribbon might be unsuitable as the plastic described would be damaged by a temperature of more than about 160 degrees C. Choice of appropriate material is therefore indicated, depending on the fluids in which the ribbon will work.

## Claims

1. Apparatus for producing twisted ribbon, having the following structure:—
   a first set of traction rollers (55);
   a heating means (56) for heating the material of the ribbon above its critical temperature;
   a main cooling means (57) for cooling the ribbon;
   a final set of traction rollers (58);
   wherein the ribbon is passed through the first set of rollers, the heating means, the main cooling means and the final set of rollers, in that consecutive order;
   and wherein the final set of rollers is mounted for rotation about an axis along the length of the ribbon, to twist the ribbon.

2. Apparatus of claim 1, wherein the traction drives of the respective sets (55, 58) of rollers are adjusted so as to maintain the ribbon between the two sets in a state of slight tension.

3. Apparatus of claim 1 or claim 2 wherein the apparatus including a preliminary cooling means (54) for cooling the ribbon;
   and wherein the ribbon is passed through the preliminary cooling means before entering the first set (55) of traction rollers.

4. Apparatus of claim 3, wherein the ribbon is extruded and passes into the preliminary cooling means (54) immediately after it is extruded.

5. Apparatus of claim 3 or claim 4, wherein the main cooling means (57) and the preliminary cooling means (54) comprise respective water baths.

6. Method of producing a twisted ribbon comprising the steps, in sequence, of:
   passing untwisted ribbon through a first set (55) of traction rollers;
   heating the ribbon to a temperature above its critical temperature;
   cooling the ribbon;
   passing the ribbon through a final set (58) of traction rollers, and rotating the final set of rollers about an axis along the length of the ribbon to twist the ribbon.

7. Method of claim 6, wherein the ribbon is maintained in a state of slight tension between the sets (55, 58) of rollers.

8. Method of claim 6 or claim 7, wherein the ribbon is extruded, and is cooled prior to being fed to the first set (55) of traction rollers.

9. Method of claim 6 or claim 7 or claim 8, wherein the ribbon is cut into lengths after having passed through the final set (58) of rollers, by chopping the ribbon, whilst the final set of rollers (58) is rotating about the said axis.

10. Method of any of claims 6 to 9, wherein the material of the ribbon is an extrusion grade homo-polymer polypropylene.

## Patentansprüche

1. Vorrichtung zur Herstellung verdrallter Bänder mit folgendem Aufbau:
   einem ersten Satz Zugrollen (55);
   einer Heizquelle (56) zum Erhitzen des Bandmaterials über seine kritische Temperatur;
   eine Hauptkühleinrichtung (57) zum Kühlen des Bandes;
   einen letzten Satz Zugrollen (58);
   wobei das Band durch den ersten Zugrollensatz, die Heizquelle, die Hauptkühleinrichtung und den letzten Zugrollensatz in dieser Reihenfolge hindurchläuft und
   wobei der letzte Zugrollensatz so angeordnet ist, daß er um eine Achse entlang der Länge des Bandes rotieren kann, um das Band zu verdrallen.

2. Vorrichtung nach Anspruch 1, wobei die Antriebe der entsprechenden Rollensätze (55, 58) so eingestellt sind, daß sie das Band zwischen den beiden Sätzen unter leichtem Zug halten.

3. Vorrichtung nach Anspruch 1 oder 2, wobei diese eine einleitende Kühlvorrichtung (54) zum Kühlen des Bandes enthält und wobei das Band durch die einleitende Kühleinrichtung geführt wird, bevor es in den ersten Zugrollensatz eintritt.

4. Vorrichtung nach Anspruch 3, wobei das Band extrudiert wird und in die einleitende Kühleinrichtung (54) unmittelbar nach dem Extrudieren eintritt.

5. Vorrichtung nach Anspruch 3 oder 4, wobei die Hauptkühleinrichtung (57) und die einleitende Kühleinrichtung (54) entsprechende Wasserbäder enthält.

6. Verfahren zur Herstellung eines verdrallten Bandes mit folgenden Schritten:
   Durchleiten des unverdrallten Bandes durch einen ersten Satz Zugrollen (55);
   Erhitzen des Bandes auf eine Temperatur oberhalb der kritischen Temperatur;
   Kühlen des Bandes;
   Durchleiten des Bandes durch einen letzten Zugrollensatz (58) und Drehen dieses letzten Zugrollensatzes um eine Achse entlang der Länge des Bandes, um dieses zu verdrallen.

7. Verfahren nach Anspruch 6, wobei das Band zwischen den letzten Sätzen (55, 58) der Rollen unter leichtem Zug gehalten wird.

8. Verfahren nach Anspruch 6 oder 7, wobei das Band extrudiert und gekühlt wird, bevor es den ersten Zugrollen zugeführt wird.

9. Verfahren nach Anspruch 6 oder 7 oder 8, wobei das Band durch Zerhacken in Längen geschnitten wird, nachdem es den letzten Rollensatz (58) durchlaufen hat, während der letzte Rollensatz (58) um die Achse rotiert.

10. Verfahren nach Anspruch 6 bis 9, wobei das Bandmaterial ein extrudierbares Homopolymerpolypropylen ist.

## Revendications

1. Appareil pour produire un ruban torsadé ayant la structure suivante:
   un premier jeu de rouleaux de traction (55);
   des moyens de chauffage (56) pour chauffer le matériau du ruban au-dessus de sa température critique;
   des moyens de refroidissement principaux (57) pour refroidir le ruban;
   un jeu terminal de rouleaux de traction (58);
   dans lequel on fait passer le ruban à travers le premier jeu de rouleaux, les moyens de chauffage, les moyens principaux de refroidissement et le jeu final de rouleaux, dans cet ordre;
   et dans lequel le jeu final de rouleaux est monté à rotation sur un axe longitudinal par rapport au ruban, afin de tordre le ruban.

2. Appareil selon la revendication 1, dans lequel les commandes de traction de chacun des jeux (55, 58) de rouleaux sont ajustées de façon à maintenir le ruban entre les deux jeux dans un état de légère tension.

3. Appareil selon la revendication 1 ou 2, dans lequel l'appareil comprend des moyens de refroidissement préliminaires (54) pour refroidir le ruban;
   et dans lequel on fait passer le ruban à travers les moyens de refroidissement préliminaires avant de le faire pénétrer dans le premier jeu (55) de rouleaux de traction.

4. Appareil selon la revendication 3, dans lequel le ruban est extrudé et on le fait passer dans les moyens de refroidissement préliminaires (54) immédiatement après son extrusion.

5. Appareil selon la revendication 3 ou 4, dans lequel les moyens de refroidissement principaux (57) et les moyens de refroidissement préliminaires (54) comportent des bains d'eau respectifs.

6. Procédé de production d'un ruban torsadé comprenant les étapes suivantes dans l'ordre:
   on fait passer le ruban non torsadé à travers un premier jeu (55) de rouleaux de traction;
   on chauffe le ruban à une température supérieure à sa température critique;
   on refroidi le ruban;
   on fait passer le ruban à travers un jeu final (58) de rouleaux de traction et on fait tourner le jeu final de rouleaux autour d'un axe longitudinal par rapport au ruban afin de torsader le ruban.

7. Procédé selon la revendication 6, dans lequel le ruban est maintenu dans un état de légère tension entre les jeux (55, 58) de rouleaux.

8. Procédé selon la revendication 6 ou la revendication 7, dans lequel le ruban est extrudé et est refroidi avant d'être envoyé dans le premier jeu de rouleaux de traction (55).

9. Procédé selon la revendication 6, 7 ou 8, dans

lequel le ruban est coupé en longueurs après avoir passé à travers le jeu final (58) de rouleaux, en tranchant le ruban tandis que le jeu final de rouleaux (58) est en train de tourner autour dudit axe.

10. Procédé selon l'une quelconque des revendications 6 à 9, dans lequel le matériau constituant le ruban est un homopolymère de polypropylène à haut degré d'extrusion.

FIG 1

17

12

15

14

17

11

FIG 2

16

13

FIG 3